# EUROPEAN PATENT SPECIFICATION

(11) **EP 1 477 455 B1**
(45) Date of publication and mention of the grant of the patent: **22.11.2006**
(21) Application number: 04010961.3
(22) Date of filing: 07.05.2004
(51) Int. Cl.: B67D 1/08, F25D 31/00

(54) **Machine for dispensing icy beverages such as slushes, sorbets and the like, particularly coffee-flavored ones**
Abgabevorrichtung für Getränke, wie Brucheis, Sorbets und dergleichen, insbesondere Getränke mit Kaffeearoma
Dispositif de distribution de boissons comme boissons avec glace concassée, sorbets et similaire, notamment avec un arome de café

(30) Priority: 16.05.2003 IT mo20030143
(43) Date of publication of application: 17.11.2004
(73) Proprietor: SPM Drink Systems S.R.L., 41057 Spilamberto (Prov. of Modena) (IT)
(72) Inventor: Grampassi, Enrico, 48015 Cervia (Prov. of Ravenna) (IT)
(74) Representative: Brogi, Graziano

(56) References cited:
- EP-A- 1 162 168
- GB-A- 2 205 638
- US-A- 3 422 634
- US-A- 5 499 744
- US-B1- 6 220 047

## Description

The present invention relates to a machine for dispensing icy beverages such as slushes, sorbets and the like, particularly coffee-flavored ones.

It is known that machines for dispensing icy beverages such as slushes and sorbets have been used for years in public places such as bars, ice-cream parlors and restaurants.

These dispensing machines are substantially constituted by at least one tank for containing the beverage to be served, which is provided with an inlet and an outlet for said beverage, and with a refrigeration system in which the evaporation unit is associated with said tank and is suitable to keep the beverage inside it at a chosen consistency.

Paddle agitator means are usually provided inside the tank and keep the beverage in motion, so as to adjust its fluidity and prevent the separation of any components that have a different specific gravity.

Known dispensing machines are further provided with sensing means for measuring physical values that are proportional to the fluidity of the beverage contained within the tank, such as for example viscosity; the sensing means are associated with a microswitch that switches on and off the compressor of the refrigeration system.

The agitator means are constituted by a spiral-shaped set of paddles, which is rotationally actuated by a motor shaft that is supported so that it can rotate and oscillate; the mixing contrast force discharged by the beverage onto the set of paddles, which is proportional to the consistency of said beverage, causes the oscillation of the motor shaft with respect to the tank.

The sensing means are generally of the mechanical type and are constituted by elastic springs for contrasting the oscillation of the motor shaft, which are preloaded so as to keep the shaft in position until the contrast offered by the beverage reaches values that indicate a consistency that is too dense with respect to the intended one.

In normal conditions, i.e., when the consistency of the beverage is close to the intended one, said shaft keeps the microswitch in the configuration in which the compressor is on.

When the beverage instead starts to become too dense, the contrast offered against mixing increases until it overcomes the action of the spring; the motor shaft can therefore oscillate, disengaging said microswitch and switching off the compressor of the refrigeration system.

However, said sensing means generally have a low sensitivity and their efficiency is greatly influenced by the quantity of beverage that is contained inside the tank.

The value of the contrast discharged onto the motor shaft for which the compressor should be switched off is in fact proportional to the volume and therefore to the mass of beverage that is present inside the tank.

Therefore, as the quantity of beverage contained in the tank varies, it would be necessary to adjust appropriately the preloading of the contrast spring.

As an alternative, dispensing machines are also known in which the rpm rate of the motor shaft that actuates the set of paddles changes when the consistency of the beverage contained in the tank varies.

When said rpm rate drops until it reaches a set threshold value, the refrigeration system is switched off. EP 1162168 A1 discloses a beverage dispenser according to the pre-characterizing portion of appended claim 1.

These known dispensing machines are not free from drawbacks, including the fact that sometimes they do not allow to maintain, and therefore serve, the beverages in optimum conditions of consistency (more or less dense beverage) and of uniform mixing of the components inside it.

This fact inevitably has a negative effect on the satisfaction index of the consumer with respect to the beverages, which can have a visually unpleasant appearance.

In the case of slushes, sorbets or other products, particularly coffee-flavored ones, preserving the beverages in inadequate temperature and mixing conditions forms, inside the tank, icy flocks that have different colors depending on their coffee content.

The beverage contained in the tank therefore assumes an unpleasant appearance, which makes it look like an old and poorly preserved product, because a gradual stratification of the color can be noted.

### SUMMARY OF THE INVENTION

The aim of the present invention is to eliminate the above-mentioned drawbacks of known dispensing machines, by providing a machine for dispensing icy beverages such as slushes, sorbets and the like, particularly coffee-flavored ones, that allows to preserve the beverages in optimum conditions, so as to serve them with the correct consistency, temperature and mixing.

Within this aim, an object of the present invention is to provide a dispensing machine that is simple, relatively easy to provide in practice, safe in use, effective in operation, and has a relatively low cost.

This aim and this and other objects that will become better apparent hereinafter are achieved by the present machine for dispensing icy beverages such as slushes, sorbets and the like, particularly coffee-flavored ones, according to appended claim 1.

Further characteristics and advantages of the present invention will become better apparent from the following detailed description of a preferred but not exclusive embodiment of a machine for dispensing icy beverages such as slushes, sorbets and the like, particularly coffee-flavored ones, illustrated by way of non-limiting example in the accompanying drawings, wherein:

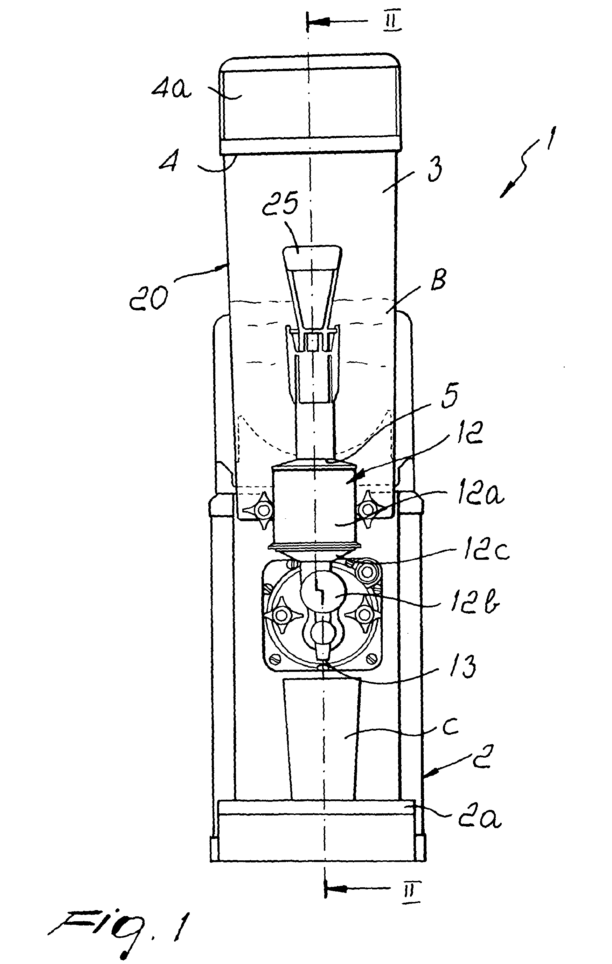

Figure 1 is a schematic front view of the dispensing machine according to the invention;
Figure 2 is a schematic sectional view, taken along the longitudinal line II-II of Figure 1, of the machine according to the invention.

With reference to the figures, the reference numeral 1 designates a machine for dispensing icy beverages such as slushes, sorbets and the like, particularly coffee-flavored ones.

The machine 1 comprises a footing 2 for supporting a tank 3 for containing an icy beverage B, which is provided with an inlet 4 and an outlet 5 for said beverage.

The inlet 4 is formed by the upper opening of the tank 3 and is closed by a detachable lid 4a; the outlet 5 is arranged proximate to the bottom of the tank 3, at the front wall of said tank.

A conventional refrigeration system RS is further accommodated inside the footing 2, and its evaporation unit EU is associated with the tank 3 and is suitable to remove heat from said tank, so as to keep the beverage B at a chosen temperature.

Such evaporation unit EU comprises a substantially tubular body 6, which is arranged proximate to the bottom of the tank 3 and is arranged so that one end 6a is located at the outlet 5 and so that its longitudinal axis A is inclined, with respect to a horizontal plane, and rises toward said outlet.

Means 7 for agitating the beverage B are provided inside the tank 3 and may be of a conventional type, constituted by a spiral-shaped set of paddles 8, which winds around the lateral surface of the body 6 and is supported, by the very body 6, so that it can rotate about a rotation axis that coincides with said longitudinal axis of the tubular body 6.

The set of paddles 8 is rotationally actuated by motor means 9, which are not shown in detail because they are of a conventional type, and are accommodated inside the footing 2.

The direction of rotation of the set of paddles 8 is such as to propel the beverage B contained inside the tank 3 toward the end 6a of the body 6 and therefore toward the outlet 5.

The machine 1 further comprises means 10 for sensing and controlling the temperature of the beverage B, which are functionally associated with the refrigeration system RS.

The sensing and control means 10 comprise a probe 11, preferably of the electronic type, which is covered with a waterproof protection made for example of stainless steel.

Advantageously, the probe 11 is supported by the end 6a of the body 6 at the outlet 5 and proximate to the bottom of the tank 3.

It should be noted that in this manner the probe 11 is arranged in a region of the tank 3 where the beverage B is always present thanks to the action of the set of paddles 8.

The probe 11 is therefore always at least partially immersed in the beverage B.

The sensing and control means 10 further comprise means for adjusting the refrigeration system, which are constituted by a programmable management unit PMU of the electronic type, that may be of a conventional type, and is associated in input with the probe 11 and in output with the compressor of the refrigeration system RS.

The management unit reads in input the data acquired by the probe 11, compares them with a set threshold value, and depending on the outcome of this comparison adjusts the operation of the compressor of the refrigeration system.

If the probe 11 measures a temperature of the beverage B that is lower than the set temperature, the management unit acts on the compressor, reducing the heat removed from the tank 3 by the evaporation unit of the refrigeration system, or by switching off the compressor.

The probe 11 allows to appreciate few temperature variations of the beverage B and therefore adjust precisely the operation of the refrigeration system by means of the management unit.

Conveniently, the machine 1 comprises a chamber 12 for collecting the beverage B, which is connected to the tank 3 through the outlet 5 and is provided with a dispensing outlet 13 for said beverage.

The chamber 12 is arranged below the tank 3 at the front part of said tank.

Advantageously, the machine 1 further comprises means 14 for mixing the beverage B in output from the tank 3, which are accommodated inside the chamber 12.

The mixing means 14 are constituted by a rotating element 15, which is supported so that it can rotate about a rotation axis X that preferably lies transversely to the flow of the beverage B inside the chamber 12 and is associated with corresponding rotary actuation means 16, which are accommodated within the footing 2.

The rotating element 15 is composed of a shaft 17, which is arranged at said rotation axis and has an end that is associated with the actuation means 16 and an opposite end that is supported so as to protrude inside the chamber 12 and is provided with paddles 18.

By way of the mixing means 14 it is therefore possible to serve a blended or "shaker-mixed" beverage B without requiring the aid of any further tool or electrical appliance.

The machine 1 therefore allows to obtain said beverages in a practical manner and quickly, and its use is particularly effective in the case of beverages B such as slushes, sorbets and the like having a coffee flavor.

The chamber 12 is constituted by a first portion 12a for receiving the beverage B, which is connected to the tank 3 through the outlet 5, and by a second portion 12b, inside which the rotating element 15 is accommodated.

The first portion 12a is arranged above the second portion 12b and the dispensing outlet 13 is arranged at the bottom of the second portion 12b.

A funnel-shaped connecting portion 12c is provided between the portions 12a and 12b and is arranged so that it tapers toward the second portion 12b.

Below the dispensing outlet 13, the footing 2 is provided with a bracket 2a for supporting a container C, such as a cup or the like, in which the beverage B is served.

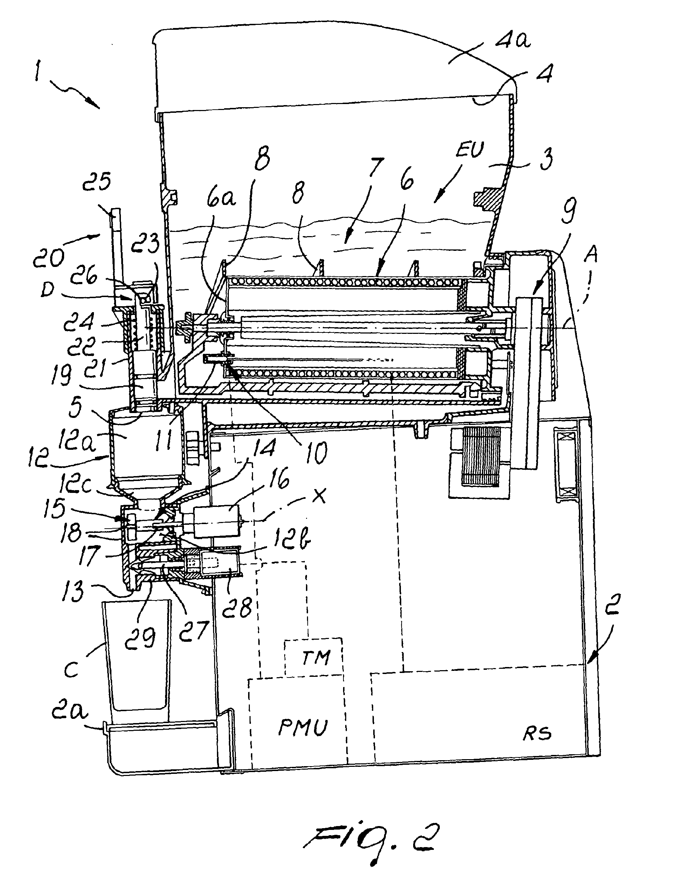

The outlet 5 is provided with an associated first flow control element 19, which can move alternately between positions corresponding to a closed configuration (Figure 2) and an open configuration of said outlet and is operatively connected or associated with first actuation means 20.

The first flow control element 19 is arranged substantially vertically and is accommodated so that it can slide within a seat 21 that is rigidly coupled to the tank 3.

A stem 22 is associated above the first flow control element 19 and protrudes upward from the seat 21; a slot 23 is provided in its upper end.

A helical compression spring 24 is fitted on the stem 22, and its lower and upper ends are arranged in abutment, respectively, against the first flow control element 19 and against the upper wall of the seat 21.

The first actuation means 20 may be constituted by a lever 25, which is pivoted above the seat 21 and is provided with a pivot 26 that is inserted in the slot 23.

The rotation of the lever 25 actuates the sliding of the first flow control element 19 along the seat 21 and the consequent opening of the outlet 5; the spring 24 then facilitates the return of the first flow control element 19 into the closed configuration.

In the particular embodiment shown, the first actuation means 20 are of the manual type, and the rotation of the lever 25 must therefore be actuated by an operator.

As an alternative, the first actuation means 20 might be of an automatic type and optionally be associated with dosage means D, that are of a conventional type, and which are suitable to adjust the quantity of beverage B that exits from the tank 3.

The first actuation means 20 of the automatic type may have, for example, means for the automatic movement of the lever 25.

The dispensing outlet 13 is associated with a second flow control element 27, which can move alternately between a closed configuration (Figure 2) and an open configuration of the dispensing outlet 13 and is associated with second actuation means 28.

The second flow control element 27 is accommodated so that it can slide along a horizontal seat 29 that is monolithically associated with the front wall of the footing 2.

In the particular embodiment shown, the second actuation means 28 are of the automatic type and are constituted by a conventional fluid-operated actuator that is associated with the second flow control element 27 and acts in a horizontal direction.

However, alternative embodiments of the machine 1, in which for example the second actuation means 28 are of the manual type, are not excluded.

Conveniently, the machine 1 can have timer means TM which activate sequentially the operation of the mixing means 14 for a set time interval and activate the subsequent opening of the dispensing outlet 13 by way of the second actuation means 28.

If the first actuation means 20 are of the automatic type, said timer means can adjust their operation.

In practice it has been found that the described invention achieves the intended aim and object.

In particular, the machine according to the invention allows to provide precise and prompt control and adjustment of the temperature of the beverage to be served and not of its consistency, regardless of the quantity of beverage contained in the tank.

Moreover, by arranging the probe proximate to the outlet of the tank it is possible to obtain a temperature measurement that is always reliable and correct.

The invention thus conceived is susceptible of numerous modifications and variations, all of which are within the scope of the appended claims.

All the details may further be replaced with other technically equivalent ones.

In practice, the materials used, as well as the shapes and dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A machine for dispensing icy beverages such as slushes, sorbets and the like, particularly coffee-flavored ones, comprising at least one tank (3) for containing an icy beverage (B), which is provided with at least one inlet (4) and at least one outlet (5) for said beverage, means (7) for agitating said beverage, which are arranged inside said tank (3), at least one refrigeration system (RS) provided with an evaporation unit (EU) associated with said tank (3), means (10) for sensing and controlling the temperature of the beverage (B) contained in said tank (3) which are functionally associated with said refrigeration system (RS) and which comprise at least one probe (11), that is at least partially immersed in the beverage (B) contained inside said tank (3) and is arranged proximate to the bottom of said tank (3), and means (PMU) for adjusting said refrigeration system (RS), said evaporation unit (EU) comprising a substantially tubular body (6), which is supported proximate to the bottom of said tank (3) and has an end (6a) that is arranged at said tank outlet (5), and said agitation means (7) comprising a set of paddles (8), that is supported so that it can rotate on the lateral surface of said body (6), and motor means (9) for rotationally actuating said set of paddles (8), the direction of rotation of the set of paddles (8) being suitable to propel the beverage (B) toward the outlet (5), **characterized in that** said probe (11) is proximate to said tank outlet (5) and is associated with said tubular body (6) at said end (6a).

2. The machine according to claim 1, **characterized in that** said probe (11) is supported by said end (6a) of said body (6) and protrudes outwardly from said end (6a) in a direction that is parallel to the axis of said tubular body (6).

3. The machine according to claim 1 or 2, **characterized in that** said probe (11) is covered with a waterproof protection.

4. The machine according to claim 1, **characterized in that** said sensing and control means (10) are of a substantially electronic type.

5. The machine according to one or more of the preceding claims, **characterized in that** said adjustment means comprise a programmable management unit (PMU), which is associated with said probe (11) in input and with said refrigeration system (RS) in output, the management unit (PMU) being adapted to adjust the operation of the refrigeration system (RS) depending on the temperature sensed by the probe (11).

6. The machine according to one or more of the preceding claims, **characterized in that** it comprises at least one beverage collection chamber (12), which is connected to said tank (3) through said tank outlet (5) and is provided with at least one dispensing outlet (13) for said beverage.

7. The machine according to claim 6, **characterized in that** said chamber (12) is arranged below said tank (3).

8. The machine according to one or more of the preceding claims, **characterized in that** it comprises a first flow control element (19), which is associated with said outlet (5), so as to move alternately between positions corresponding to an open configuration and a closed configuration of said outlet tank (5), and is further associated with first actuation means (20).

9. The machine according to claim 8, **characterized in that** said first actuation means (20) are of the manual type.

10. The machine according to one or more of the preceding claims, **characterized in that** said first actuation means (20) are of a substantially automatic type.

11. The machine according to one or more of the preceding claims, **characterized in that** it comprises dosage means (D), which are associated with said first automatic actuation means (20) and are adapted to adjust the quantity of beverage (B) that exits from said tank (3).

12. The machine according to one or more of the claims 6-11, **characterized in that** it comprises a second flow control element (27), which is associated with said dispensing outlet (13), can move alternately between an open configuration and a closed configuration of said dispensing outlet (13), and is associated with second actuation means (28).

13. The machine according to claim 12, **characterized in that** said second actuation means (28) are of the manual type.

14. The machine according to claim 12, **characterized in that** said second actuation means (28) are of a substantially automatic type.

15. The machine according to one or more of the claims 6-14, **characterized in that** it comprises means (14) for mixing the beverage (B) in output from said tank (3) which are accommodated inside said chamber (12).

16. The machine according to claim 15, **characterized in that** said mixing means (14) comprise at least one rotating element (15), which is supported so that it can rotate about a rotation axis (X) inside said chamber (12).

17. The machine according to claim 16, **characterized in that** said rotation axis (X) is arranged substantially transversely to the flow of the beverage (B) through said chamber (12).

18. The machine according to one or more of the claims 6-17, **characterized in that** said chamber (12) comprises a first portion (12a) for receiving the beverage (B) in output from said tank (3), which is connected to said tank (3) by way of said tank outlet (5), and a second portion (12b) for accommodating said mixing means (14), which is associated with said dispensing outlet (13), the first and second portions (12a, 12b) being mutually connected.

19. The machine according to one or more of the claims 6-18, **characterized in that** said chamber (12) comprises a substantially funnel-shaped connecting portion (12c), which is interposed between said first and second portions (12a, 12b).

20. The machine according to one or more of the claims 18-19, **characterized in that** said first portion (12a) is arranged above said second portion (12b), the dispensing outlet (13) being arranged proximate to the bottom of the second portion (12b).

21. The machine according to one or more of the claims 12-20, **characterized in that** it comprises timer means (1M) that operate sequentially said mixing means (14) and said second automatic actuation means (28) for opening said dispensing outlet (13).

22. The machine according to claim 21, **characterized in that** said timer means (TM) are associated with said first automatic actuation means (20).

## Patentansprüche

1. Maschine zur Ausgabe von Eisgetränken, z.B. von Slush-Getränken, Sorbets und dergleichen, insbesondere solcher mit Kaffee-Geschmack, mit mindestens einem Vorratsgehälter (3) für ein derartiges Eisgetränk (b), der mit mindestens einem Einlass (4) und mindestens einem Auslass (5) für das genannte Getränk versehen ist, mit Mitteln zum Umrühren des Getränks, die innerhalb des genannten Tanks (3) angeordnet sind, mindestens einem Kühlsystem (RS), das mit einer dem Tank (3) zugeordneten Verdampfereinheft ausgerüstet ist, Mitteln (10) zur Erfassung und Steuerung der in dem Tank enthaltenen Getränkeflüssigkeit, die funktionell dem genannten Kühlsystem zugeordnet sind und mindestens eine Sonde (11) umfassen, die mindestens teilweise in das Getränk (B) eingetaucht ist, das in dem Tank (3) enthalten ist und in unmittelbarer Nähe des Bodens genannten Tanks (3) angeordnet ist, sowie mit einer Einrichtung (PMU) zur Einstellung des genannten Kühlsystems (RS), wobei die Verdampfereinheit (EU) einen im Wesentlichen rohrförmigen Grundkörper (6) umfasst, der in unmittelbarer Nähe des Bodens des Tanks (3) gelagert ist und mit seiner Stirnseite (6a) am Tankauslass (5) angeordnet ist, wobei das Rührwerk (7) einen Satz von Rührflügeln (8) umfasst, der derart angeordnet ist, dass er in einem radial äußeren Bereich des genannten Grundkörpers (6) drehbar ist und mit einer Motoreinrichtung (9) zum rotatorischen Antrieb der Rührflügel (8), wobei die Drehrichtung des Satzes von Rührflügeln (8) dahingehend geeignet vorgegeben ist, dass das Getränk (B) in Richtung auf den Auslass (5) hin förderbar ist, **dadurch gekennzeichnet, dass** die Sonde (11) in unmittelbarer Nähe des Tankauslasses (5) und im Bereich der Stirnseite des genannten röhrenförmigen Grundkörpers (6) angeordnet ist.

2. Maschine nach Anspruch 1, **dadurch gekennzeichnet, dass** die genannte Stim-Endwand (6a) des röhrenförmigen Grundkörpers (6) die Sonde trägt, die, von dieser Endstimwand (6a) ausgehend, sich parallel zur Achse eines röhrenförmigen Grundkörpers (6) erstreckt.

3. Maschine nach Anspruch 1 oder Anspruch 2, **dadurch gekennzeichnet, dass** die Sonde (11) mit einer wasserdichten Schutzschicht über zogen ist.

4. Maschine nach Anspruch 1, **dadurch gekennzeichnet, dass** die Sensor- und die Steuerungseinrichtung (10) als elektronisches Gerät ausgebildet ist.

5. Maschine nach einem oder mehreren der vorhergehenden Ansprüche, **dadurch gekennzeichnet, dass** die Einstelleinrichtung eine programmierbare Betriebssteuereinheit (PMU) umfasst, die eingangsseitig der Sonde (11) und ausgangsseitig dem Kühlsystem (RS) zugeordnet ist, wobei die Betriebssteuereinheit (PMU) dahingehend konzipiert ist, dass der Betrieb des Kühlsystems (RS) in Abhängigkeit von der mittels der Sonde (11) sensierten Temperatur einstellbar ist.

6. Maschine nach einem oder mehreren der vorhergehenden Ansprüche, **dadurch gekennzeichnet, dass** zur Aufnahme von Getränkeflüssigkeft mindestens eine Kammer (12) vorgesehen ist, die über den genannten Tank-Ausgang (5) mit dem Tank (3) verbunden ist und mit mindestens einem Auslass (13) für die Ausgabe des Getränks versehen ist.

7. Maschine nach Anspruch 6, **dadurch gekennzeichnet, dass** die Sammelkammer (12) unterhalb des Tanks (13) angeordnet ist.

8. Maschine nach einem oder mehreren der vorhergehenden Ansprüche, **dadurch gekennzeichnet, dass** dem Auslass (5) ein erstes Stellelement (19) zugeordnet ist, das alternierend zwischen Funktionsstellungen bewegbar ist, die einer Durchflussstellung einerseits und einer gesperrten Stellung des Tankauslasses (5), andererseits, entsprechen und des weiteren mit einer ersten Betätigungseinrichtung (20) funktionell gekoppelt ist.

9. Maschine nach Anspruch 8, **dadurch gekennzeichnet, dass** diese erste Betätigungseinrichtung (20) manuell betätigbar ist.

10. Maschine nach einem oder mehreren der vorhergehenden Ansprüche, **dadurch gekennzeichnet, dass** die erste Betätigungseinrichtung (20) als im wesentlichen automatisch arbeitende Einrichtung ausgebildet ist.

11. Maschine nach einem oder mehreren der vorhergehenden Ansprüche, **dadurch gekennzeichnet, dass** Dosiereinrichtungen (D) vorgesehen sind, die der ersten automatischen Betätigungseinrichtung (20) zugeordnet und weiter dahingehend ausgelegt sind, dass die Menge des Getränks (B), die aus dem Tank (13) abströmt, ermittelbar ist.

12. Maschine nach einem oder mehreren der Ansprüche 6 bis 11, **dadurch gekennzeichnet, dass** ein zweites Durchflusssteuerelement vorgesehen ist, das funktionell dem Abgabeausgang (13) zugeordnet ist und zwischen einer Offen-Stellung und einer Sperr-Stellung dieses Ausgabeausganges (13) umsteuerbar ist und der zweiten Betätigungseinrichtung (28) zugeordnet ist.

13. Maschine nach Anspruch 12, **dadurch gekennzeichnet, dass** die zweite Betätigungseinrichtung (28) manuell betätigbar ist.

14. Maschine nach Anspruch 12, **dadurch gekennzeichnet, dass** die zweite Betätigungseinrichtung (28) als im Wesentlichen automatisch arbeitende Einrichtung ausgebildet ist.

15. Maschine nach einem oder mehreren der Ansprüche 6 bis 14, **dadurch gekennzeichnet, dass** Mischeinrichtungen (14) zur Mischung des Getränks (B) am Ausgang des Tanks (3) vorgesehen sind, die im Inneren der Kammer (12) angeordnet sind.

16. Maschine nach Anspruch 15, **dadurch gekennzeichnet, dass** die Mischeinrichtung mindestens ein rotierendes Element (15) umfasst, das derart gelagert ist, dass es um eine innerhalb der Kammer (12) verlaufende Rotationsachse (X) drehbar ist.

17. Maschine nach Anspruch 16, **dadurch gekennzeichnet, dass** die Rotationsachse (X) im Wesentlichen quer zu der Strömungsrichtung des Getränks (B) durch die genannte Kammer (12) verläuft.

18. Maschine nach einem oder mehreren der Ansprüche 6 bis 17, **dadurch gekennzeichnet, dass** die Sammelkammer (12) einen ersten Bereich (12a) zur Aufnahme von Getränkeflüssigkeit (B) am Ausgang des Tanks (3) umfasst, der mit dem Tank (3) mittels des Tankauslasses (5) verbunden ist, sowie einen zweiten Bereich (12b), der die Mischeinrichtung (14) aufnimmt, die dem Ausgabeausgang (13) zugeordnet ist, wobei der erste und der zweite Bereich (12a,12b) wechselseitig miteinander verbunden sind.

19. Maschine nach einem oder mehreren der Ansprüche 6 bis 18, **dadurch gekennzeichnet, dass** die Sammelkammer (12) ein im Wesentlichen trichterförmig gestaltetes Verbindungsteil (12c) umfasst, das zwischen dem ersten Abschnitt (12a) und dem zweiten Abschnitt (12b) angeordnet ist.

20. Maschine nach Anspruch 18 oder Anspruch 19, **dadurch gekennzeichnet, dass** der erste Bereich (12a) der Sammelkammer (12) ober halb des zweiten Bereichs (12b) angeordnet ist, wobei der Verteüerauslass (13) in der Nähe des Bodens des zweiten Bereichs (12b) angeordnet ist.

21. Maschine nach einem oder mehreren der Ansprüche 12 bis 20, **dadurch gekennzeichnet, dass** eine Ablauf-Steuerungseinrichtung (TB) vorgesehen ist, die sequentiell die Mischeinrichtung (14) und die zweite automatische Betätigungseinrichtung (28) zur Öffnung des Verteilerauslasses (13) betätigt (ansteuert).

22. Maschine nach Anspruch 21, **dadurch gekennzeichnet, dass** die Ab-Iaufsteuerungseinrichtung (TM) der ersten automatisch arbeitenden Betätigungseinrichtung (20) zugeordnet ist.

## Revendications

1. Machine pour distribuer des boissons glacées comme des granités, des sorbets et analogues, en particulier aromatisées au café, comprenant au moins un réservoir (3) destiné à contenir une boisson glacée (B), qui est muni d'au moins une entrée (4) et d'au moins une sortie (5) pour ladite boisson, des moyens (7) pour agiter ladite boisson, qui sont agencés à l'intérieur dudit réservoir (3), au moins un système de réfrigération (RS) équipé d'une unité d'évaporation (EU) associée audit réservoir (3), des moyens (10) pour détecter et contrôler la température de la boisson (B) contenue dans ledit réservoir (3), qui sont associés fonctionnellement audit système de réfrigération (RS) et qui comprennent au moins une sonde (11) qui est au moins partiellement immergée dans la boisson (B) contenue dans ledit réservoir (3) et est placée près du fond dudit réservoir (3), et des moyens (PMU) pour régler ledit système de réfrigération (RS), ladite unité d'évaporation (EU) comprenant un corps (6) sensiblement tubulaire qui est soutenu près du fond dudit réservoir (3) et a une extrémité (6a) qui est agencée au niveau de ladite sortie (5) du réservoir, et lesdits moyens d'agitation (7) comprenant un groupe de pales (8), qui est soutenu de façon pouvoir tourner sur la surface latérale dudit corps (6), et des moyens de moteur (9) pour actionner en rotation ledit groupe de pales (8), la direction de rotation du groupe de pales (8) étant propre à propulser la boisson (B) vers la sortie (5), ***caractérisée en ce que*** ladite sonde (11) est proche de ladite sortie (5) du réservoir et est associée audit corps tubulaire (6) au niveau de ladite extrémité (6a).

2. Machine selon la revendication 1, ***caractérisée en ce que*** ladite sonde (11) est soutenue par ladite extrémité (6a) dudit corps (6) et forme saillie vers l'extérieur depuis ladite extrémité (6a) dans une direction qui est parallèle à l'axe dudit corps tubulaire (6).

3. Machine selon la revendication 1 ou 2, ***caractérisée en ce que*** ladite sonde (11) est enveloppée avec une protection imperméable à l'eau.

4. Machine selon la revendication 1, ***caractérisée en ce que*** lesdits moyens de détection et de contrôle (10) sont d'un type essentiellement électronique.

5. Machine selon l'une ou plusieurs des revendications précédentes, ***caractérisée en ce* que** lesdits moyens de réglage comprennent une unité de gestion programmable (PMU) qui est associée à ladite sonde (11) en entrée et audit système de réfrigération (RS) en sortie, l'unité de gestion programmable (PMU) étant adaptée pour régler le fonctionnement du système de réfrigération (RS) en fonction de la température détectée par la sonde (11).

6. Machine selon l'une ou plusieurs des revendications précédentes, ***caractérisée en ce* qu'**elle comprend au moins une chambre (12) de réception de la boisson qui est reliée audit réservoir (3) par ladite sortie de réservoir (5) et est munie d'au moins une sortie de distribution (13) pour ladite boisson.

7. Machine selon la revendication 6, ***caractérisée en ce que*** ladite chambre (12) est agencée au-dessous dudit réservoir (3).

8. Machine selon l'une ou plusieurs des revendications précédentes, ***caractérisée en ce* qu'**elle comprend un premier élément (19) de contrôle du débit qui est associé à ladite sortie (5), de façon à se déplacer en alternance entre des positions correspondant à une configuration ouverte et à une configuration fermée de ladite sortie (5) du réservoir, et est associé de plus à des premiers moyens d'actionnement (20).

9. Machine selon la revendication 8, ***caractérisée en ce que*** lesdits premiers moyens d'actionnement (20) sont de type manuel.

10. Machine selon l'une ou plusieurs des revendications précédentes, ***caractérisée en ce que*** lesdits premiers moyens d'actionnement (20) d'un type essentiellement automatique.

11. Machine selon l'une ou plusieurs des revendications précédentes, ***caractérisée en ce* qu'**elle comprend des moyens de dosage (D) qui sont associés auxdits premiers moyens d'actionnement automatiques (20) et sont adaptés pour régler la quantité de boisson (B) qui sort dudit réservoir (3).

12. Machine selon l'une ou plusieurs des revendications 6 à 11, ***caractérisée en ce qu*'**elle comprend un deuxième élément (27) de contrôle de débit qui est associé à ladite sortie de distribution (13), peut se déplacer en alternance entre une configuration ouverte et une configuration fermée de ladite sortie de distribution (13), et est associé à des deuxièmes moyens d'actionnement (28).

13. Machine selon la revendication 12, ***caractérisée en ce que*** lesdits deuxièmes moyens d'actionnement (28) sont du type manuel.

14. Machine selon la revendication 12, ***caractérisée en ce que*** lesdits deuxièmes moyens d'actionnement (28) sont d'un type essentiellement automatique.

15. Machine selon l'une ou plusieurs des revendications 6 à 14, ***caractérisée en ce qu*'**elle comprend des moyens (14) pour mélanger la boisson (B) délivrée depuis ledit réservoir (3), moyens qui sont placés dans ladite chambre (12).

16. Machine selon la revendication 15, ***caractérisée en ce que*** lesdits moyens de mélange (14) comprennent au moins un élément rotatif (15) qui est soutenu de façon à pouvoir tourner autour d'un axe de rotation (X) dans ladite chambre (12).

17. Machine selon la revendication 16, ***caractérisée en ce que*** ledit axe de rotation (X) est agencé pour l'essentiel transversalement à l'écoulement de la boisson (B) à travers ladite chambre (12).

18. Machine selon l'une ou plusieurs des revendications 6 à 17, ***caractérisée en ce que*** ladite chambre (12) comprend une première partie (12a) pour recevoir la boisson (B) en sortie dudit réservoir (3), partie qui est reliée audit réservoir (3) au moyen de ladite sortie (5) du réservoir, et une deuxième partie (12b) pour recevoir lesdits moyens de mélange (14), qui est associée à ladite sortie de distribution (13), la première et la deuxième parties (1,2a, 12b) étant reliées l'une à l'autre.

19. Machine selon l'une ou plusieurs des revendications 6 à 18, ***caractérisée en ce que*** ladite chambre (12) comprend une partie de liaison (12c) sensiblement en forme d'entonnoir, qui est interposée entre lesdites première et deuxième parties (12a, 12b).

20. Machine selon l'une ou plusieurs des revendications 18-19, ***caractérisée en ce que*** ladite première partie (12a) est agencée au-dessus de ladite deuxième partie (12b), la sortie de distribution (13) étant placée près du fond de la deuxième partie (12b).

21. Machine selon l'une ou plusieurs des revendications 12 à 20, ***caractérisée en ce qu*'**elle comprend des moyens de minuterie (TM) qui actionnent séquentiellement lesdits moyens de mélange (14) et lesdits deuxièmes moyens d'actionnement automatique (28) pour ouvrir ladite sortie de distribution (13).

22. Machine selon la revendication 21, ***caractérisée en ce que*** lesdits moyens de minuterie (TM) sont associés auxdits premiers moyens d'actionnement automatique (20).
